(19) **Europäisches Patentamt**
**European Patent Office**
**Office européen des brevets**

(11) **EP 4 251 868 B1**

(12) **FASCICULE DE BREVET EUROPEEN**

(45) Date de publication et mention
de la délivrance du brevet:
**18.02.2026 Bulletin 2026/08**

(51) Classification Internationale des Brevets (IPC):
**F02D 41/00** *(2006.01)* **F02D 41/14** *(2006.01)*
**F02D 35/02** *(2006.01)*

(21) Numéro de dépôt: **21811325.6**

(22) Date de dépôt: **15.11.2021**

(52) Classification Coopérative des Brevets (CPC):
**F02D 41/0002; F02D 35/023; F02D 41/1401;**
F02D 2041/1433; F02D 2200/0402;
F02D 2200/0411; Y02T 10/40

(86) Numéro de dépôt international:
**PCT/EP2021/081655**

(87) Numéro de publication internationale:
**WO 2022/112034 (02.06.2022 Gazette 2022/22)**

(54) **PROCEDE DE DETERMINATION DE LA MASSE DE GAZ ASPIRE AU MOYEN DE LA FREQUENCE DES OSCILLATIONS DE PRESSION**

VERFAHREN ZUR BESTIMMUNG DER MENGE EINES DURCH DIE FREQUENZ DER DRUCKSCHWINGUNGEN ANGESAUGTEN GASES

METHOD FOR DETERMINING THE MASS OF GAS DRAWN IN BY MEANS OF THE FREQUENCY OF THE PRESSURE OSCILLATIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.11.2020 FR 2012132**

(43) Date de publication de la demande:
**04.10.2023 Bulletin 2023/40**

(73) Titulaire: **IFP Energies nouvelles**
**92500 Rueil-Malmaison (FR)**

(72) Inventeurs:
• **LEROY, Thomas**
**92852 RUEIL-MALMAISON CEDEX (FR)**
• **KASSA, Mateos**
**92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**WO-A1-2015/022383 WO-A1-2015/082731**

• **PAU BARES: "In-cylinder pressure resonance analysis for trapped mass estimation in automotive engines", 30 June 2017 (2017-06-30), Valencia, XP055690937, Retrieved from the Internet <URL:https://riunet.upv.es/bitstream/ handle/10251/90423/Bares%20-%20In-cylinder% 20pressure%20resonance%20analysis%20for% 20trapped%20mass%20estimation%20in% 20automotive%20engines.pdf?sequence=1> [retrieved on 20200430]**

## Description

### Domaine technique

La présente invention concerne le domaine de la détermination de la masse de gaz aspiré dans une chambre de combustion d'un moteur à combustion interne.

La masse de gaz aspiré dans une chambre de combustion est un paramètre utile notamment pour le contrôle des moteurs à combustion interne, pour les tests des moteurs à combustion interne, afin d'analyser notamment la combustion, d'améliorer les stratégies de contrôle de la combustion, d'améliorer le comportement cycle à cycle et entre cylindres d'un moteur à combustion interne. La connaissance de ce paramètre est important en particulier pour les moteurs à allumage commandé et pour les moteurs Diesel équipés d'une recirculation des gaz d'échappement (EGR) et/ou d'une distribution variable.

### Technique antérieure

Afin de mesurer la masse de gaz aspiré dans une chambre de combustion, il peut être envisagé un débitmètre. Toutefois, un tel capteur est onéreux, et présente des dispersions importantes d'un débitmètre à l'autre. De plus, on peut noter, qu'aucun capteur ne mesure la concentration en recirculation interne des gaz brûlés (IGR de l'anglais « Internal gas Residual »). C'est pourquoi, plusieurs méthodes ont été développées pour estimer ce paramètre. Toutefois, aucune méthode ne permet de disposer d'une information fiable.

En particulier, certaines méthodes sont basées sur des mesures de la pression d'admission, qui peut ne pas représenter de manière fiable les phénomènes physiques mis en jeu au sein de la chambre de combustion. D'autres méthodes nécessitent des techniques de traitement de signal qui peuvent être complexes, longues et qui peuvent également générer des imprécisions sur la masse de gaz enfermé estimée.

La demande de brevet WO 2007060349 décrit une méthode basée sur l'utilisation d'un capteur de pression dans le cylindre et d'un capteur de température en aval de la soupape d'échappement. Ainsi, cette méthode nécessite une instrumentation spécifique du moteur à combustion interne. En outre, cette méthode reconstruit la température du gaz dans le cylindre à partir de la mesure du capteur de température en aval de la soupape d'échappement. Cette reconstruction génère des approximations, qui influent sur la précision de la masse de gaz enfermé estimée.

La demande de brevet WO 2015082731 décrit une méthode basée sur l'estimation de la fréquence de résonance de la pression dans la chambre de combustion au moyen d'une transformée de Fourier, qui est un traitement du signal issu du capteur de pression. Cette estimation de la fréquence de résonance manque de précision pour une estimation précise de la masse de gaz enfermé. En outre, cette méthode utilise la résolution des équations de Bessel, ayant pour hypothèse que la chambre de combustion est un cylindre parfait. Cependant, les chambres de combustion des moteurs à combustion interne ne sont pas purement cylindriques. L'estimation obtenue par cette méthode se retrouve par conséquent erronée en raison de cette hypothèse. De plus, cette méthode nécessite des oscillations d'amplitudes importantes. Un autre état de la technique pertinent se trouve dans la thèse de doctorat de Pau Bares intitulée "In-cylinder pressure resonance analysis for trapped mass estimation in automotive engines".

De plus, les méthodes de l'art antérieur ne considèrent pas les différences entre les cylindres du moteur, le remplissage est estimé uniquement à l'aide de plusieurs capteurs communs aux cylindres (pression admission, température admission, régime, etc.), et donc suppose une répartition identique de l'air aspiré à travers les cylindres, ce qui n'est pas le cas. En effet, cette estimation est incorrecte en raison des systèmes d'admission et d'échappement qui sont différents pour les cylindres. De plus, le moyen de refroidissement n'est généralement pas équilibré sur chaque cylindre. En outre, on peut ajouter que les normes du type « Real Driving Emissions (RDE) » (pouvant être traduit par émissions en conduite réelle) imposent des normes strictes sur les émissions polluantes. La connaissance de la masse aspirée dans chaque cylindre permet d'optimiser au mieux la combustion et ainsi de minimiser ces émissions. Par conséquent, pour assurer la régulation de chaque cylindre, il est important de connaître tous les paramètres de chaque cylindre.

### Résumé de l'invention

La présente invention a pour but de déterminer de manière précise et robuste la masse de gaz aspiré dans une chambre de combustion d'un moteur à combustion interne, avec une instrumentation simple et classique, et sans traitement du signal complexe. Dans ce but, le procédé de détermination de la masse de gaz aspiré dans au moins une chambre de combustion selon l'invention se base sur la mesure de la pression au sein de la chambre de combustion. Le procédé met en œuvre la détermination de la fréquence d'oscillations, puis son utilisation dans un modèle de la chambre de combustion. Ainsi, le procédé selon l'invention est précis, fiable, et nécessite une instrumentation simple. De plus, l'invention est particulièrement adaptée pour déterminer la masse de gaz aspiré cylindre à cylindre et cycle à cycle.

L'invention concerne un procédé de détermination de la masse de gaz aspiré dans au moins un cylindre d'un moteur à combustion interne, ledit au moins un cylindre étant équipé d'un capteur de pression, dans lequel on met en œuvre les étapes suivantes :

a. On mesure la pression dudit gaz dans ledit au moins un cylindre au moyen dudit capteur de pression ;
b. On détermine les oscillations de ladite pression dudit gaz à partir de ladite mesure de pression dans ledit au moins un cylindre ;
c. On détermine une fréquence instantanée desdites oscillations de pression f par une méthode de calibration de la fréquence d'oscillations de pression ou par une moyenne desdites oscillations de pression sur une fenêtre temporelle prédéterminée ;
d. On détermine la masse de gaz enfermé $m_{tot}$ dans ledit au moins un cylindre au moyen de la formule : avec $m = \frac{\gamma PV}{\lambda^2 f^2}$ avec V étant le volume de la chambre de combustion dudit au moins un cylindre, $\lambda$ la longueur d'onde dans ledit au moins un cylindre, P ladite pression mesurée dudit gaz dans ledit au moins un cylindre, et $\gamma$ le rapport thermique spécifique déterminé au moyen d'une approximation adiabatique ; et
e. On détermine ladite masse de gaz aspiré dans ledit au moins un cylindre par différence entre ladite masse enfermé déterminée et une masse de gaz résiduel dans ledit au moins un cylindre.

Avantageusement, on applique ladite approximation adiabatique par l'équation : $\gamma PV = \frac{-V^2 dP}{dV}$ .

Selon l'invention on détermine ladite masse de gaz résiduel $m_{res}$ dans ledit au moins un cylindre au moyen de l'équation $m_{res}(N, MAP, MAT, V_{IVC}, V_{EVC}) = c_1 \frac{MAP \cdot V_{IVC}}{R \cdot MAT} - c_2 \frac{OF}{N} - c_3 V_{EVC}$ avec N le régime dudit moteur à combustion, MAP la pression dans le collecteur d'admission dudit moteur à combustion interne, MAT la température dans ledit collecteur d'admission dudit moteur à combustion interne, $V_{IVC}$ le volume de la chambre de combustion dudit au moins un cylindre à la fermeture de la soupape d'admission dudit au moins un cylindre, $V_{EVC}$ le volume de la chambre de combustion dudit au moins un cylindre à la fermeture de la soupape d'échappement dudit au moins un cylindre, R la constante des gaz, OF le facteur de chevauchement dudit au moins un cylindre, $c_1$, $c_2$, $c_3$ paramètres de calibration.

Selon un aspect, on détermine lesdites oscillations de ladite pression au moyen d'un filtre, notamment d'un filtre passe-bande.

Selon une option de réalisation, ledit moteur à combustion interne comporte une pluralité de cylindres, chaque cylindre est équipé d'un capteur de pression, et on détermine la masse de gaz aspiré dans chaque cylindre dudit moteur à combustion interne en mettant en œuvre les étapes pour chaque cylindre.

De manière avantageuse, ledit volume V de la chambre de combustion dudit au moins un cylindre est obtenu au moyen d'une cartographie en fonction de l'angle vilebrequin dudit moteur à combustion interne.

Selon une caractéristique, ladite longueur d'onde $\lambda$ est obtenue au moyen d'une cartographie en fonction de l'angle vilebrequin dudit moteur à combustion interne.

Conformément à un mode de réalisation, ladite fenêtre temporelle prédéterminée est comprise entre 10 et 40 ° de l'angle de rotation du vilebrequin dudit moteur à combustion interne.

De préférence, on détermine ladite masse de gaz enfermé au moyen de la formule $m_{tot} = \left( \frac{\sqrt{\frac{\gamma PV}{\lambda^2}}}{\bar{f}} \right)^2$ et $\bar{f}$ la fréquence moyenne desdites oscillations de pression déterminées pendant une fenêtre temporelle desdites oscillations prédéterminée, $\overline{\sqrt{\frac{\gamma PV}{\lambda^2}}}$ étant la moyenne de $\sqrt{\frac{\gamma PV}{\lambda^2}}$ pendant ladite fenêtre temporelle prédéterminée.

En variante, on détermine ladite fréquence instantanée desdites oscillations de pression en mettant en œuvre une calibration par comparaison desdites oscillations de pressions déterminées avec des fréquences d'oscillations de pression générées De manière avantageuse, on détermine ladite fréquence instantanée desdites oscillations de pression f en mettant en œuvre les étapes suivantes de calibration :

i) On considère au moins deux masses de gaz enfermées prédéfinies $m_1, ..., m_n$ ;
ii) On détermine un rapport thermique spécifique $\gamma$ pour chaque masse de gaz enfermée prédéfinie $m_1, ..., m_n$ ;

iii) On détermine au moyen de ladite formule $m = \frac{\gamma PV}{\lambda^2 f^2}$ une fréquence d'oscillations de pression f pour chaque masse de gaz enfermée prédéfinie $m_1$, ..., $m_n$ en fonction de ladite pression de gaz P mesurée, dudit volume V de la chambre de combustion, de ladite longueur d'onde $\lambda$ et dudit rapport thermique spécifique $\gamma$ déterminé ; et

iv) On compare (COMP) chaque fréquence d'oscillations de pression f déterminée avec lesdites oscillations de pression mesurées (OSC), et on détermine ladite masse de gaz enfermée m en tant que la masse prédéfinie pour laquelle la fréquence d'oscillations de pression f minimise ladite comparaison.

Avantageusement, on détermine chaque rapport thermique spécifique $\gamma$ de chaque masse de gaz enfermée prédéfinie $m_1$, ..., $m_n$ en mettant en œuvre les étapes suivantes :

1. On détermine la composition de ladite masse enfermée ;
2. On détermine une relation qui relie ledit rapport thermique spécifique $\gamma$ et la capacité du gaz $c_p$ dans ladite chambre de combustion : $\gamma = \frac{c_p}{c_p - R}$ avec R la constante du gaz, et la capacité du gaz $c_p$ étant fonction de la température dudit gaz et de ladite composition de ladite masse enfermée ;
3. On détermine la température dudit gaz au moyen de la loi des gaz parfaits appliquée à chaque masse enfermée prédéfinie $m_1$, ..., $m_n$ ; et
4. On en déduit ledit rapport thermique spécifique $\gamma$ pour chaque masse enfermée prédéfinie $m_1$, ..., $m_n$.

Conformément à une mise en œuvre, on détermine ladite masse de gaz aspiré en temps réel.

De plus, l'invention concerne un procédé de contrôle d'un moteur à combustion interne, ledit moteur à combustion interne comprenant au moins un cylindre équipé d'un capteur de pression, dans lequel on met en œuvre les étapes suivantes :

a. On détermine la masse de gaz aspiré au moyen du procédé de détermination de la masse de gaz aspiré selon l'une des caractéristiques précédentes ; et
b. On contrôle ledit moteur à combustion interne en fonction de ladite masse de gaz aspiré déterminée.

En outre, l'invention concerne un système de contrôle d'un moteur à combustion interne, ledit moteur à combustion interne comprenant au moins un cylindre équipé d'un capteur de pression, ledit système de contrôle étant apte à mettre en œuvre un procédé selon l'une des caractéristiques précédentes pour contrôler ledit moteur à combustion interne.

L'invention concerne également un produit programme d'ordinateur téléchargeable depuis un réseau de communication et/ou enregistré sur un support lisible par ordinateur et/ou exécutable par un processeur, comprenant des instructions de code de programme pour la mise en œuvre d'un procédé selon l'une des caractéristiques précédentes, lorsque ledit programme est exécuté sur un ordinateur ou un calculateur.

D'autres caractéristiques et avantages du procédé selon l'invention, apparaîtront à la lecture de la description ci-après d'exemples non limitatifs de réalisations, en se référant aux figures annexées et décrites ci-après.

**Liste des figures**

La figure 1 illustre un cylindre d'un moteur à combustion interne.

La figure 2 illustre les étapes du procédé de détermination de la masse de gaz aspiré selon un mode de réalisation de l'invention.

La figure 3 illustre les étapes du procédé de détermination du contrôle du moteur à combustion interne selon un mode de réalisation de l'invention.

La figure 4 illustre la masse de gaz aspiré, en fonction du cycle, obtenue par le procédé selon l'invention pour trois cylindres pour un exemple de fonctionnement d'un moteur à combustion interne.

La figure 5 illustre, pour un exemple de réalisation, la masse de gaz aspiré mesurée et la masse de gaz aspiré obtenue par un procédé selon l'art antérieur, ainsi que le ratio entre la masse de gaz aspiré mesurée et la masse de gaz obtenue par un procédé selon l'art antérieur.

La figure 6 illustre, pour le même exemple de réalisation, la masse de gaz aspiré mesurée et la masse de gaz aspiré obtenue par le procédé selon un mode de réalisation de l'invention, ainsi que le ratio entre la masse de gaz aspiré mesurée et la masse de gaz obtenue par le procédé selon un mode de réalisation de l'invention.

**Description des modes de réalisation**

La présente invention concerne un procédé de détermination de la masse de gaz aspiré dans une chambre de combustion d'un moteur à combustion interne.

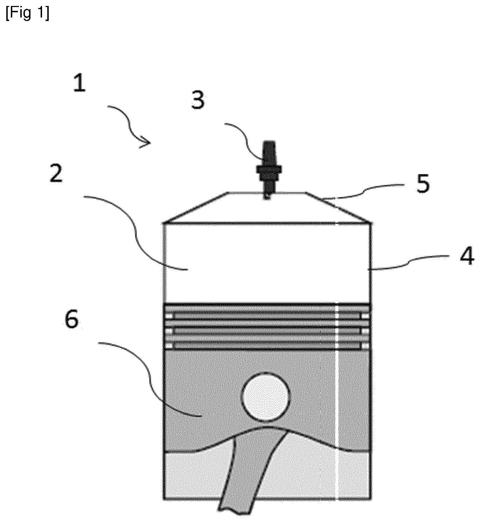

De manière classique, un moteur à combustion interne comprend au moins un cylindre, un piston coulissant dans ce cylindre en un mouvement rectiligne alternatif, des moyens d'admission d'un comburant (gaz), des moyens d'échappement de gaz brûlés, une chambre de combustion, et des moyens d'injection pour injecter un combustible dans la chambre de combustion. La chambre de combustion est agencée dans la partie haute de cylindre, et son volume varie par le déplacement du piston dans le cylindre. La figure 1 illustre, schématiquement et de manière non limitative, un cylindre 1 d'un moteur à combustion interne selon un mode de réalisation de l'invention. Sur cette figure, les moyens d'admission, d'échappement, d'injection, et les éventuels moyens d'allumage ne sont pas représentés. Au sein du cylindre 1 se déplace un piston 6 selon un mouvement rectiligne alternatif. La chambre de combustion 2 est la zone où se produit la combustion, elle est limitée par la partie supérieure du piston 6, la paroi latérale 4 du cylindre, et le toit du cylindre 5. Cette zone correspond à la zone blanche de la figure 1. En outre, pour le procédé selon l'invention, le cylindre comporte un capteur de pression 3, qui mesure la pression du gaz dans la chambre de combustion 2.

Le moteur à combustion interne peut être de tout type, à allumage commandé ou à auto-inflammation, avec ou sans recirculation des gaz d'échappement, avec ou sans suralimentation. Toutefois, le procédé selon l'invention est particulièrement adapté aux moteurs à allumage commandé, et aux moteurs à auto-inflammation équipés d'une recirculation des gaz d'échappement (EGR) et/ou d'une distribution variable.

Par les termes gaz ou comburant, il est compris de l'air à pression ambiante ou de l'air suralimenté ou encore un mélange d'air (suralimenté ou non) avec des gaz brûlés.

Le procédé de détermination de la masse de gaz aspiré selon l'invention utilise un unique capteur : un capteur de pression dans la chambre de combustion. L'utilisation d'un unique capteur permet de limiter l'instrumentation du moteur. De plus, la mesure de la pression dans la chambre de combustion permet d'avoir directement des informations relatives au comportement du gaz dans la chambre de combustion, contrairement à un capteur placé à l'admission ou à l'échappement qui nécessiterait de reconstruire la pression dans la chambre de combustion. Un tel capteur présente également l'avantage d'équiper classiquement un banc moteur, et les moteurs à combustion interne des véhicules récents, en particulier pour les nouveaux moteurs à auto-inflammation, ce qui facilite la mise en œuvre du procédé, et ce qui limite son coût.

Le procédé selon l'invention comporte les étapes suivantes :

- Mesure de la pression du gaz dans la chambre de combustion ;
- Détermination des oscillations de la pression de gaz mesurée ;
- Détermination de la fréquence des oscillations de pression ;
- Détermination de la masse de gaz enfermé ; et
- Détermination de la masse de gaz aspiré.

Ces étapes seront détaillées dans la suite de la description.

Selon un mode de réalisation de l'invention, ces étapes peuvent être mises en œuvre en temps réel, afin de déterminer en temps réel la masse de gaz aspiré, facilitant l'exploitation de ce paramètre.

De plus, ces étapes peuvent être mises en œuvre en ligne, sur un moteur à combustion interne d'un véhicule ou sur un banc moteur.

Les étapes de détermination des oscillations de la pression de gaz, de la détermination de la fréquence des oscillations de pression, de la détermination de la masse de gaz enfermé, de la détermination de la masse de gaz aspiré peuvent être mises en œuvre par des moyens informatiques, notamment un calculateur/contrôleur équipant le moteur à combustion interne.

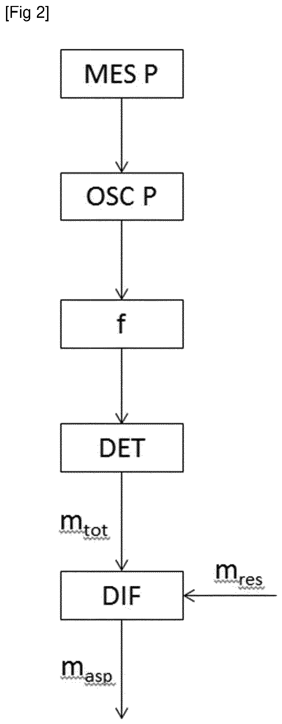

La figure 2 illustre, schématiquement et de manière non limitative, les étapes du procédé de détermination de la masse de gaz aspiré selon un mode de réalisation de l'invention. La première étape consiste à mesurer la pression du gaz MES P dans la chambre de combustion, au moyen d'un capteur de pression. La deuxième étape consiste à déterminer les oscillations de pression de gaz OSC P à partir de la mesure de pression de gaz réalisée précédemment. La troisième étape consiste à déterminer la fréquence f des oscillations de pressions. Cette fréquence f des oscillations de pression est utilisée pour déterminer DET la masse de gaz enfermé $m_{tot}$ dans la chambre de combustion à partir notamment des oscillations de pression. Ensuite, on détermine la masse de gaz aspiré $m_{asp}$ dans la chambre de combustion par différence DIF avec une masse de gaz résiduel dans la chambre de combustion $m_{res}$.

L'invention peut concerner en outre un procédé de contrôle d'un moteur à combustion interne. Pour ce procédé, on peut mettre en œuvre les étapes suivantes :

- Mesure de la pression du gaz dans la chambre de combustion ;
- Détermination des oscillations de la pression de gaz mesurée ;
- Détermination de la fréquence des oscillations de pression ;
- Détermination de la masse de gaz enfermé ;
- Détermination de la masse de gaz aspiré ; et
- Contrôle du moteur à combustion interne.

Ces étapes seront détaillées dans la suite de la description.

Selon un mode de réalisation de l'invention, ces étapes peuvent être mises en œuvre en temps réel, afin de déterminer en temps réel la masse de gaz aspiré, facilitant le contrôle en temps réel du moteur à combustion interne.

De plus, ces étapes peuvent être mises en œuvre en ligne, sur un moteur à combustion interne d'un véhicule ou sur un banc moteur.

Les étapes de détermination des oscillations de la pression de gaz, de la détermination des oscillations de pression, de la détermination de la masse de gaz enfermé, de la détermination de la masse de gaz aspiré et de contrôle du moteur à combustion interne peuvent être mises en œuvre par des moyens informatiques, notamment un calculateur/contrôleur équipant le moteur à combustion interne.

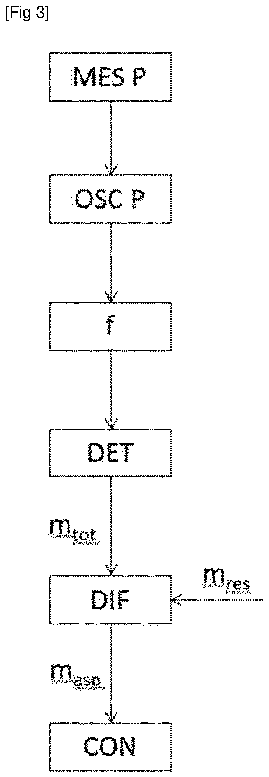

La figure 3 illustre, schématiquement et de manière non limitative, les étapes du procédé de contrôle du moteur selon un mode de réalisation de l'invention. La première étape consiste à mesurer la pression du gaz MES P dans la chambre de combustion, au moyen d'un capteur de pression. La deuxième étape consiste à déterminer les oscillations de pression de gaz OSC P à partir de la mesure de pression de gaz réalisée précédemment. La troisième étape consiste à déterminer la fréquence f des oscillations de pressions. Cette fréquence f des oscillations de pression est utilisée pour déterminer DET la masse de gaz enfermé $m_{tot}$ dans la chambre de combustion à partir notamment des oscillations de pression. Ensuite, on détermine la masse de gaz aspiré $m_{asp}$ dans la chambre de combustion par différence DIF avec une masse de gaz résiduel dans la chambre de combustion $m_{res}$. Puis, on contrôle CON le moteur à combustion interne en fonction de la masse de gaz aspiré $m_{asp}$ déterminée.

De manière avantageuse, le moteur à combustion interne peut comporter plusieurs cylindres équipés d'un capteur de pression, et on peut déterminer la masse de gaz aspiré dans chaque cylindre en appliquant pour chaque cylindre les étapes énumérées ci-dessus. Ainsi, le procédé selon l'invention permet de déterminer la masse de gaz aspiré cylindre par cylindre et cycle à cycle. Une détermination de la masse de gaz aspiré dans chaque cylindre et sur chaque cycle permet une intervention ou une surveillance ciblée sur chaque cylindre, qui peut permettre une meilleure maîtrise de la richesse ainsi qu'une amélioration de la performance du moteur à combustion.

1) Mesure de la pression du gaz

Lors de cette étape, on mesure la pression du gaz dans l'au moins une chambre de combustion, au moyen d'un capteur de pression de gaz placé dans l'au moins une chambre de combustion.

2) Détermination des oscillations de la pression

Lors de cette étape, on détermine les oscillations de la pression de gaz, au cours du temps, à partir de la pression du gaz. Ainsi, on peut connaître précisément les phénomènes physiques mis en œuvre dans l'au moins une chambre de combustion.

Selon un mode de réalisation, cette étape peut être mise en œuvre au moyen d'un filtre, de préférence au moyen d'un filtre passe bande autour de la fréquence d'intérêt. Selon un exemple non limitatif, on peut mettre en œuvre un filtre passe bande entre 5 et 9 kHz. Cette plage de fréquences est particulièrement adaptée pour les moteurs à combustions internes des véhicules pour particulier. La largeur du filtre passe bande peut être adaptée aux dimensions du moteur à combustion interne. De manière non limitative, on peut utiliser un filtre Butterworth.

3) Détermination de la fréquence des oscillations de pression

Lors de cette étape, on détermine à partir des oscillations de pression la fréquence instantanée des oscillations de pression. Pour cela, on peut mettre en œuvre l'une des deux étapes suivantes :

- calibration de la fréquence des oscillations de pression

- détermination d'une fréquence moyenne dans une fenêtre temporelle prédéterminée Ces deux modes de réalisation sont détaillés ci-dessus, ils permettent de déterminer la fréquence instantanée des oscillations de pression, de manière rapide et robuste.

Pour le premier mode de réalisation, on peut déterminer la fréquence d'oscillations de pression en mettant en œuvre une calibration par comparaison des oscillations de pressions déterminées à l'étape 2, avec des fréquences d'oscillations de pression générées. Par exemple, on peut mettre en œuvre les étapes suivantes:

- On considère au moins deux masses de gaz enfermées prédéfinies $m_1$, ..., $m_n$, il s'agit d'au moins deux masses de gaz enfermées possibles, n est un entier supérieur ou égal à 2, selon un aspect de l'invention, les masses de gaz enfermées prédéfinies $m_1$, ..., $m_n$ sont contenues dans une liste prédéfinie préalablement au déroulé du procédé,
- On détermine un rapport thermique spécifique $\gamma$ pour chaque masse de gaz enfermée prédéfinie $m_1$, ..., $m_n$, par exemple on peut déduire de chaque masse de gaz enfermée prédéfinie $m_1$, ..., $m_n$ une température T dans la chambre de combustion, et en appliquant les étapes décrites ci-dessus, on peut en déduire la capacité thermique du mélange $c_p$, qui est ensuite utilisée pour obtenir le rapport thermique spécifique $\gamma$ en fonction de l'angle vilebrequin,
- On détermine au moyen de la formule $m = \dfrac{\gamma PV}{\lambda^2 f^2}$ une fréquence d'oscillations de pression f pour chaque masse de gaz enfermée prédéfinie $m_1$, ..., $m_n$ en fonction de la pression mesurée P et des paramètres déterminés, le volume V de la chambre de combustion et la longueur d'onde $\lambda$, et le rapport thermique spécifique $\gamma$ déterminé à l'étape précédente, en d'autres termes on inverse la formule $m = \dfrac{\gamma PV}{\lambda^2 f^2}$ pour obtenir une équation $f = \sqrt{\dfrac{\gamma PV}{m\lambda^2}}$ dont tous les paramètres sont déterminés (P, V, y, $\lambda$) ou prédéfini (m),
- On compare chaque fréquence d'oscillations de pression f obtenue à l'étape précédente avec les oscillations de pression mesurée (déterminées à l'étape 2), et on détermine la masse de gaz enfermée en tant qu'une des masses de gaz enfermées prédéfinies $m_1$, ..., $m_n$, pour laquelle la fréquence d'oscillations de pression f minimise la comparaison, en d'autres termes, la masse de gaz enfermée déterminée par le procédé est une des masses de gaz enfermées prédéfinies $m_1$, ..., $m_n$ : celle pour laquelle la différence entre la fréquence d'oscillation de pression f et les oscillations de pression mesurée est minimale. La comparaison peut consister en une comparaison des oscillations. De préférence, seule la fréquence des oscillations de pression mesurée est utilisée pour la calibration, l'amplitude de celles-ci n'est pas utile pour la comparaison. De préférence, cette étape peut consister en une génération des oscillations de pression avec les différentes fréquences déterminées puis on compare les oscillations obtenues avec celles déterminées à l'étape 2, et on choisit le signal pour lequel l'oscillation du signal est comparable aux oscillations de la pression mesurée.

Selon le deuxième mode de réalisation de l'invention, la fenêtre temporelle prédéterminée peut être comprise entre 10 et 40° de l'angle du vilebrequin, juste après le début de la combustion, où de fortes oscillations de pression peuvent être identifiées. Cette gamme de valeur permet une bonne estimation de la fréquence instantanée des oscillations de pression.

4) Détermination de la masse de gaz enfermé

Lors de cette étape, on détermine la masse de gaz enfermé dans l'au moins une chambre de combustion. Pour cette étape, on peut mettre en œuvre la formule : $m = \dfrac{\gamma PV}{\lambda^2 f^2}$. Dans cette formule, V est le volume de la chambre de combustion (variable dans le temps), $\lambda$ est la longueur d'onde dans la chambre de combustion, P la pression mesurée du gaz dans la chambre de combustion, f la fréquence des oscillations de pression (déterminée à l'étape précédente) et $\gamma$ le rapport thermique spécifique

La formule utilisée peut être déduite d'un modèle de la chambre de combustion qui s'écrit $m = \dfrac{\gamma PV}{\lambda^2 f^2}$. Ce modèle est obtenu à partir de la loi des gaz parfaits : $PV = mRT$, de l'équation de la fréquence d'oscillations $f = \dfrac{c}{\lambda}$ et de l'équation de la vitesse du son $c = \sqrt{\gamma RT}$, c étant la vitesse instantanée du son dans la chambre de combustion. Ainsi, la formule est représentative des phénomènes physiques du gaz dans la chambre de combustion, ce qui permet l'obtention précise de la masse de gaz enfermé.

Conformément à une mise en œuvre de l'invention, on peut déterminer le rapport thermique spécifique $\gamma$ au moyen d'une approximation adiabatique. De préférence, cette approximation adiabatique peut permettre de déterminer : $\gamma PV = \dfrac{-V^2 dP}{dV}$. Cette hypothèse est justifiée en fin de combustion et la dispersion de la mesure de la pression cylindre a un impact négligeable. Ainsi, de cette manière, on peut relier la masse de gaz enfermé uniquement à la pression du cylindre P, au volume de la chambre de combustion V, à la fréquence f des oscillations, et à la longueur d'onde λ.

Alternativement, le rapport thermique spécifique $\gamma$ peut être déterminé en prenant en compte la composition de la masse enfermée dans la chambre de combustion, et au moyen de la capacité thermique des composants de la masse enfermée dans la chambre de combustion.

Pour ce mode de réalisation, on peut prendre en compte la fraction volumique des composants du carburant injecté dans la chambre de combustion (par exemple la fraction volumique d'éthanol dans une essence), le rapport quantité d'air par quantité de carburant dans la chambre de combustion par rapport au rapport stœchiométrique, et la proportion de gaz imbrûlés dans la chambre de combustion. De plus, ce mode de réalisation peut mettre en œuvre les étapes suivantes :

- On détermine les coefficients de la formule chimique du carburant, par exemple les coefficients x, y, z pour un carburant de la forme CxHyOz (lorsque le carburant n'est pas un mélange, et lorsque le carburant est un mélange on peut pondérer les coefficients des composants de base du carburant, en fonction de la fraction volumique des composants du carburant) ;
- On détermine la capacité thermique du mélange non brûlé dans la chambre de combustion, en prenant en compte les coefficients de la formule chimique du carburant (par exemple x, y, z), et le rapport quantité d'air par quantité de carburant dans la chambre de combustion par rapport au rapport stœchiométrique. On peut se servir de l'équation bilan de la combustion (pour déterminer la concentration des composants de l'air et du carburant) et d'une équation de capacité Cp thermique de chaque composant de l'équation bilan, cette équation pouvant être de la forme $Cp(T) = a + b \times T + c \times T^2 + d \times T^3 + e \times T^4$ avec T la température dans la chambre de combustion, et a, b, c, d et e des coefficients obtenus par des tables (ex : Table de JANAF) pour chaque composant du mélange non brûlé,
- On détermine la capacité thermique du mélange brûlé dans la chambre de combustion, en prenant en compte les coefficients de la formule chimique du carburant (par exemple x, y, z), la méthodologie pouvant être identique à celle décrite pour la capacité thermique du mélange non brûlé. On peut se servir de l'équation bilan de la combustion (pour déterminer la concentration des composants du mélange brûlé) et des équations de capacité Cp thermique de chaque composant.
- On détermine la capacité thermique du mélange carburé par association de la capacité thermique du mélange brûlé et de la capacité thermique du mélange non brûlé, selon un mode de réalisation de cette étape, on peut, par exemple, considérer que le mélange carburé comprend 50% de mélange brûlé et 50% de mélange non brûlé (ou toute autre répartition),
- On détermine le rapport de capacité thermique y par l'équation $\gamma = \frac{c_p}{c_p - R}$ avec $c_p$ la capacité thermique du mélange carburé déterminée à l'étape précédente, et R la constante des gaz parfaits.

Pour la mise en œuvre de ce mode de réalisation, la température T du mélange peut être déduite de la loi des gaz parfaits $PV = mRT$ en sélectionnant au moins une masse de gaz enfermée hypothétique, P, V et R étant connus par ailleurs.

Selon un mode de réalisation de l'invention, le volume V de la chambre de combustion peut être obtenu au moyen d'une cartographie ou une table du volume de la chambre de combustion en fonction de l'angle vilebrequin du moteur à combustion interne. Cette cartographie traduit les variations du volume lié au mouvement du piston. L'utilisation d'une telle cartographie permet de rendre la détermination du volume de la chambre de combustion rapide, et utilisable en temps réel.

La longueur d'onde λ dépend de la position du piston (elle est donc variable dans le temps) et de la forme de la chambre de combustion. Conformément à une mise en œuvre de l'invention, la longueur d'onde λ peut être obtenue au moyen d'une cartographie de la longueur d'onde λ en fonction de l'angle vilebrequin du moteur à combustion interne. L'utilisation d'une telle cartographie permet de rendre la détermination de la longueur d'onde λ rapide, et utilisable en temps réel.

Pour cette mise en œuvre, la cartographie de la longueur d'onde λ peut être construite préalablement et numériquement. La détermination numérique de la longueur d'onde λ, permet de déterminer une longueur d'onde λ pour toute forme de la chambre de combustion. Ainsi, la détermination de la masse aspirée ne comporte pas d'approximation liée à la forme de la chambre de combustion.

Selon un aspect préféré de cette mise en œuvre, la cartographie de la longueur d'onde λ peut être construite par une approche par éléments finis en trois dimensions (appliquée à la chambre de combustion) pour résoudre l'équation d'onde en trois dimensions à chaque angle vilebrequin, et pour ainsi déterminer le rapport entre la fréquence d'oscillations de pression et la vitesse imposée du son. Les entrées de l'approche par éléments finis peuvent être :

- La géométrie de la chambre de combustion à chaque angle vilebrequin,

- L'équation d'onde à résoudre : $\Delta P = \frac{1}{c^2}\frac{\delta^2 P}{\delta t^2}$ avec la vitesse du son c fixe,
- Les conditions aux limites : $\nabla P.\ n = 0$, n étant le vecteur normal à la paroi du cylindre,

Alternativement, la longueur d'onde λ peut être déterminée par d'autres méthodes, par exemple analytiquement.

Pour le deuxième mode de réalisation de l'étape 3 (détermination de la fréquence moyenne sur une fenêtre temporelle prédéterminée), pour cette étape, on peut mettre en œuvre la formule : $m = \left(\frac{\overline{\sqrt{\frac{\gamma PV}{\lambda^2}}}}{\bar{f}}\right)^2$. Dans cette formule, V est le volume de la chambre de combustion (variable dans le temps), λ est la longueur d'onde dans la chambre de combustion, P la pression mesurée du gaz dans la chambre de combustion, f la fréquence des oscillations de pression (les oscillations de pression étant déterminées à l'étape précédente) et γ le rapport thermique spécifique. De plus, $\bar{f}$ représente la fréquence moyenne des oscillations de pression déterminées dans le cylindre pendant une fenêtre temporelle des oscillations prédéterminée, $\overline{\sqrt{\frac{\gamma PV}{\lambda^2}}}$ étant la moyenne de $\sqrt{\frac{\gamma PV}{\lambda^2}}$ pendant la fenêtre temporelle prédéterminée. Les moyennes sur la fenêtre temporelle prédéterminée permettent un calcul rapide et fiable, en particulier de la fréquence des oscillations, ce qui permet notamment une réduction de l'impact de dispersion liée au capteur de pression.

## 5) Détermination de la masse de gaz aspiré

Lors de cette étape, on détermine la masse de gaz aspiré dans l'au moins une chambre de combustion. Pour cela, on fait la différence entre la masse de gaz enfermé déterminée à l'étape précédente et la masse de gaz résiduel dans l'au moins un cylindre. La masse de gaz résiduel est la masse de gaz qui reste dans le cylindre après la fermeture des soupapes d'échappement et d'admission. La masse de gaz résiduel peut être positive : il reste un gaz dans la chambre de combustion, ou peut être négative : une partie de la masse de gaz aspiré ressort directement à l'échappement sans participer à la combustion, on peut alors parler de masse de gaz balayé.

Ainsi, on peut écrire :

$$m_{asp} = m_{tot}\left(P_{cyl}\right) - m_{res}$$

Avec $m_{asp}$ la masse de gaz aspiré dans l'au moins un cylindre, $m_{tot}(P_{cyl})$ la masse de gaz enfermé déterminé à l'étape précédente avec la mesure de la pression du cylindre $P_{cyl}$, et $m_{res}$ la masse de gaz résiduel.

La masse de gaz résiduel peut être déterminée par toute méthode, par exemple une méthode qui utilise le volume de la chambre de combustion à la fermeture des soupapes d'échappement.

Selon un exemple non limitatif, la masse de gaz résiduel peut être obtenue au moyen de la formule :

$$m_{res}(N, MAP, MAT, V_{IVC}, V_{EVC}) = c_1\frac{MAP \cdot V_{IVC}}{R \cdot MAT} - c_2\frac{OF}{N} - c_3 V_{EVC}$$

Avec

- N le régime du moteur à combustion,
- MAP la pression dans le collecteur d'admission du moteur à combustion interne, pouvant être obtenue au moyen d'un capteur de pression,
- MAT la température dans le collecteur d'admission du moteur à combustion interne, pouvant être obtenue au moyen d'un capteur de température,
- $V_{IVC}$ le volume de la chambre de combustion de l'au moins un cylindre à la fermeture de la soupape d'admission de l'au moins un cylindre,
- $V_{EVC}$ le volume de la chambre de combustion de l'au moins un cylindre à la fermeture de la soupape d'échappement de l'au moins un cylindre,
- R la constante des gaz,
- OF le facteur de chevauchement de l'au moins un cylindre, fonction des calages des soupapes d'admission et d'échappement du cylindre,
- $c_1$, $c_2$, $c_3$ paramètres de calibration prédéterminés notamment au moyen de données expérimentales, et établis en fonction du régime moteur et de la pression dans le collecteur d'échappement.

6) Contrôle du moteur à combustion interne

Lors de cette étape facultative, on commande le moteur à combustion interne en fonction de la masse de gaz aspiré déterminé à l'étape 5. La commande du moteur à combustion interne a notamment pour but de piloter la masse de gaz au sein du cylindre du moteur à combustion interne, et d'en améliorer le rendement, et éventuellement de limiter les émissions de polluants.

Selon un mode de réalisation de l'invention, on peut commander le moteur à combustion interne par contrôle de la quantité de carburant injectée. Alternativement et/ou additionnellement, on peut contrôler la richesse du mélange carburé (air et carburant) dans le cylindre, par exemple par commande d'une vanne papillon, d'une soupape d'admission, d'un turbocompresseur. Alternativement et/ou additionnellement, on peut contrôler le niveau de recirculation des gaz brûlés (EGR), par exemple par commande d'une vanne EGR, etc. Alternativement et/ou additionnellement, on peut contrôler l'avance à l'allumage.

De plus, l'invention concerne un système de commande d'un moteur de combustion interne comprenant des moyens pour la mise en œuvre du procédé selon l'une quelconque des combinaisons de variantes du procédé de commande décrites précédemment.

En particulier, le système de commande peut comprendre :

- au moins un capteur de pression, de préférence un capteur de pression par cylindre,
- des moyens de traitement du signal de chaque capteur de pression,
- des moyens de calcul pour déterminer la masse de gaz enfermé et la masse de gaz aspiré,
- une mémoire pour enregistrer les mesures du capteur de pression,
- des moyens de commande d'au moins un actionneur.

Les moyens de traitement du signal, la mémoire, les moyens de calcul, et les moyens de commande peuvent être intégrés au sein d'un calculateur/contrôleur embarqué d'un véhicule.

L'invention concerne également un moteur de combustion interne équipé d'un tel système de commande.

En outre, l'invention concerne un produit programme d'ordinateur téléchargeable depuis un réseau de communication et/ou enregistré sur un support lisible par ordinateur (calculateur embarqué) et/ou exécutable par un processeur. Ce programme comprend des instructions de code de programme pour la mise en œuvre du procédé tel que décrit ci-dessus, lorsque le programme est exécuté sur un ordinateur ou un calculateur/contrôleur.

Comme il va de soi, l'invention ne se limite pas aux seules formes de réalisation décrites ci-dessus à titre d'exemple, elle embrasse au contraire toutes les variantes de réalisation.

Exemples d'applications

Les caractéristiques et avantages du procédé selon l'invention apparaîtront plus clairement à la lecture des exemples d'application ci-après

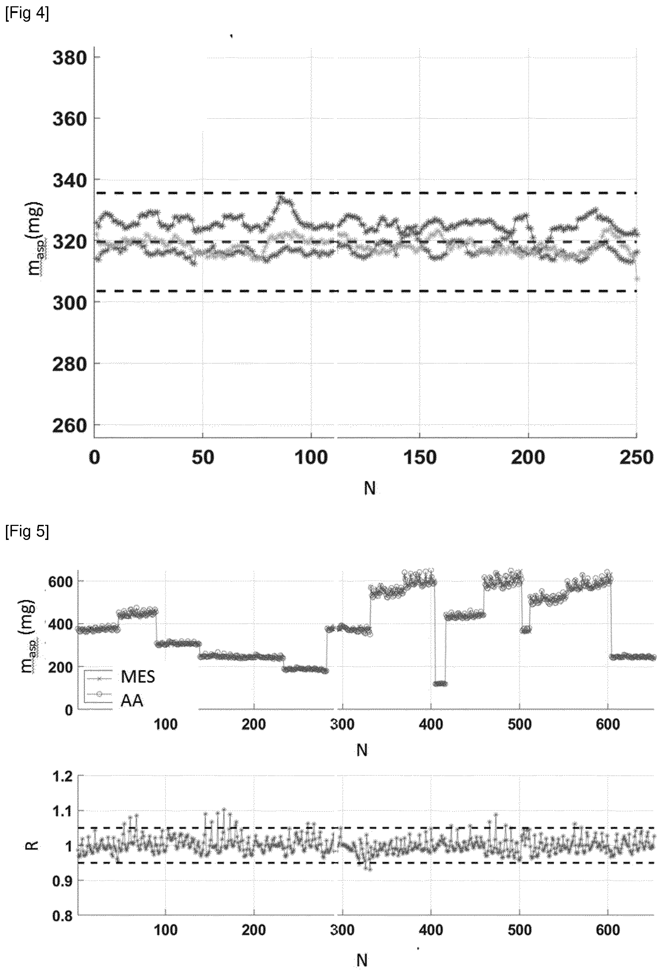

Pour le premier exemple, on applique le procédé de détermination de la masse de gaz aspiré selon un mode de réalisation de l'invention pour trois cylindres d'un moteur à combustion interne. Chaque cylindre est équipé d'un capteur de pression. Pour cet exemple, on considère un point de fonctionnement stabilisé du moteur à 3000 tr/min avec une pression moyenne indiquée PMI de 8,5 bar (0,85 MPa). La figure 4 représente trois courbes (une courbe par cylindre) de la masse de gaz aspiré $m_{asp}$ en mg en fonction du numéro N du cycle, pour cet exemple de réalisation. On remarque que bien que proches, les masses de gaz aspiré dans chaque cylindre sont différentes. Ainsi, on peut distinguer chaque cylindre et appliquer un contrôle approprié pour chaque cylindre, ce qui permet d'améliorer les performances du moteur à combustion interne.

Pour le deuxième exemple, on compare le procédé de détermination de la masse de gaz aspiré selon un mode de réalisation de l'invention avec la détermination de la masse de gaz aspiré selon un art antérieur. Pour ce deuxième exemple, on met en œuvre un moteur à combustion interne sans système de recirculation des gaz brûlés EGR. L'art antérieur met en œuvre le procédé de détermination de la masse de gaz aspiré décrite dans la demande de brevet FR2941266. En parallèle, on mesure la masse de gaz aspiré dans le cylindre au banc moteur. Pour ce deuxième exemple, on fait varier les conditions de fonctionnement du moteur à combustion interne entre plusieurs points de fonctionnement stabilisés.

La figure 5 représente, dans la partie haute, une courbe de la masse de gaz aspiré $m_{asp}$ en mg en fonction du numéro N du point de fonctionnement, la courbe avec des croix correspond aux mesures de la masse de gaz aspiré MES et la courbe avec des ronds correspond à la détermination de la masse de gaz aspiré au moyen du procédé selon l'art antérieur AA. On remarque que les courbes sont assez superposées, avec des erreurs plus importantes pour les points de fonctionnement entre 300 et 600. Dans la partie basse de la figure 5, on représente le ratio R de la masse de gaz aspiré estimée par le procédé selon l'art antérieur par la masse de gaz aspiré mesurée. Sur cette figure, les traits pointillés indiquent une différence (erreur d'estimation) de 5% par rapport à la valeur 1. Pour cet exemple, l'erreur moyenne d'estimation est d'environ 1,7 % et on peut noter que pour 21 cycles sur 631, l'erreur d'estimation est supérieure à 5%.

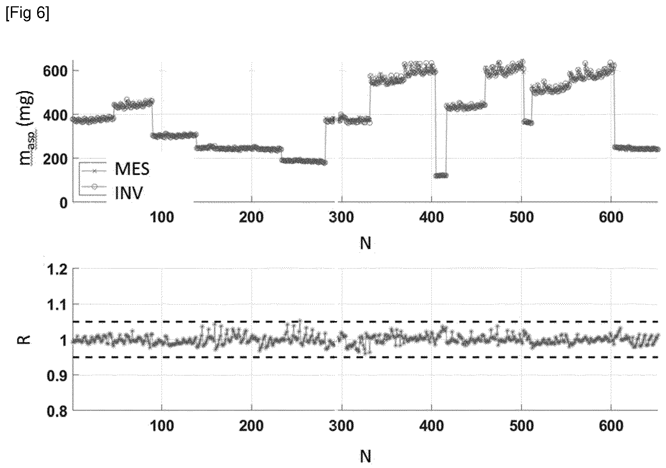

La figure 6 est identique à la figure 5 pour le procédé selon l'invention. Pour la partie haute, la courbe avec des croix correspond aux mesures de la masse de gaz aspiré MES et la courbe avec des ronds correspond à la détermination de la masse de gaz aspiré au moyen du procédé selon un mode de réalisation de l'invention INV. Pour cet exemple, l'erreur moyenne d'estimation est d'environ 0,9 % et on peut noter que pour seulement 1 cycle sur 631, l'erreur d'estimation est supérieure à 5 %.

Ainsi, le procédé selon l'invention permet une détermination plus précise de la masse de gaz aspiré que le procédé selon l'art antérieur.

**Revendications**

1. Procédé de détermination de la masse de gaz aspiré dans au moins un cylindre (1) d'un moteur à combustion interne, ledit au moins un cylindre étant équipé d'un capteur de pression (3), dans lequel on met en oeuvre les étapes suivantes :

   a. On mesure la pression dudit gaz (MES P) dans ledit au moins un cylindre (1) au moyen dudit capteur de pression (3) ;
   b. On détermine les oscillations de ladite pression (OSC P) dudit gaz à partir de ladite mesure de pression dans ledit au moins un cylindre (1) ;
   c. On détermine une fréquence instantanée desdites oscillations de pression f par une méthode de calibration de la fréquence d'oscillations de pression ou par une moyenne desdites oscillations de pression sur une fenêtre temporelle prédéterminée ;
   d. On détermine (DET) la masse de gaz enfermé $m_{tot}$ dans ledit au moins un cylindre (1) au moyen de la formule :
   avec $m = \frac{\gamma PV}{\lambda^2 f^2}$ avec V étant le volume de la chambre de combustion (2) dudit au moins un cylindre (1), $\lambda$ la longueur d'onde dans ledit au moins un cylindre (1), P ladite pression mesurée dudit gaz dans ledit au moins un cylindre (1), et $\gamma$ le rapport thermique spécifique déterminé au moyen d'une approximation adiabatique ; et
   e. On détermine ladite masse de gaz aspiré dans ledit au moins un cylindre (1) par différence (DIF) entre ladite masse enfermé déterminée et une masse de gaz résiduel dans ledit au moins un cylindre au moyen de l'équation

   $m_{res}(N, MAP, MAT, V_{IVC}, V_{EVC}) = c_1 \frac{MAP \cdot V_{IVC}}{R \cdot MAT} - c_2 \frac{OF}{N} - c_3 V_{EVC}$ avec N le régime dudit moteur à combustion, MAP la pression dans le collecteur d'admission dudit moteur à combustion interne, MAT la température dans ledit collecteur d'admission dudit moteur à combustion interne, $V_{IVC}$ le volume de la chambre de combustion (2) dudit au moins un cylindre (1) à la fermeture de la soupape d'admission dudit au moins un cylindre (1), $V_{EVC}$ le volume de la chambre de combustion dudit au moins un cylindre à la fermeture de la soupape d'échappement dudit au moins un cylindre (1), R la constante des gaz, OF le facteur de chevauchement dudit au moins un cylindre, $c_1$, $c_2$, $c_3$ paramètres de calibration.

2. Procédé de détermination de la masse de gaz aspiré selon la revendication 1, dans lequel on applique ladite approximation adiabatique par l'équation : $\gamma PV = \frac{-V^2 dP}{dV}$ .

3. Procédé de détermination de la masse de gaz aspiré selon l'une des revendications précédentes, dans lequel on détermine lesdites oscillations de ladite pression (OSC P) au moyen d'un filtre, notamment d'un filtre passe-bande.

4. Procédé de détermination de la masse de gaz aspiré selon l'une des revendications précédentes, dans lequel ledit moteur à combustion interne comporte une pluralité de cylindres (1), dans lequel chaque cylindre (1) est équipé d'un capteur de pression (3), et dans lequel on détermine la masse de gaz aspiré dans chaque cylindre dudit moteur à combustion interne en mettant en oeuvre les étapes pour chaque cylindre (1).

5. Procédé de détermination de la masse de gaz aspiré selon l'une des revendications précédentes, dans lequel ledit volume V de la chambre de combustion (2) dudit au moins un cylindre (1) est obtenu au moyen d'une cartographie en fonction de l'angle vilebrequin dudit moteur à combustion interne.

**6.** Procédé de détermination de la masse de gaz aspiré selon l'une des revendications précédentes, dans lequel ladite longueur d'onde λ est obtenue au moyen d'une cartographie en fonction de l'angle vilebrequin dudit moteur à combustion interne.

**7.** Procédé de détermination de la masse de gaz aspiré selon l'une des revendications précédentes, dans lequel ladite fenêtre temporelle prédéterminée est comprise entre 10 et 40 ° de l'angle de rotation du vilebrequin dudit moteur à combustion interne.

**8.** Procédé de détermination de la masse de gaz aspiré selon la revendication 7, dans lequel on détermine ladite masse de gaz enfermé au moyen de la formule $m_{tot} = \left( \dfrac{\sqrt{\frac{\gamma PV}{\lambda^2}}}{\bar{f}} \right)^2$ et $\bar{f}$ la fréquence moyenne desdites oscillations de pression déterminées pendant la $\overline{\sqrt{\frac{\gamma PV}{\lambda^2}}}$ fenêtre temporelle desdites oscillations prédéterminée, étant la moyenne

de $\sqrt{\frac{\gamma PV}{\lambda^2}}$ pendant ladite fenêtre temporelle prédéterminée

**9.** Procédé de détermination de la masse de gaz aspiré selon l'une des revendications 1 à 5, dans lequel on détermine ladite fréquence instantanée desdites oscillations de pression en mettant en oeuvre une calibration par comparaison desdites oscillations de pressions déterminées avec des fréquences d'oscillations de pression générées

**10.** Procédé de détermination de la masse de gaz aspiré selon la revendication 9 dans lequel on détermine ladite fréquence instantanée desdites oscillations de pression f en mettant en oeuvre les étapes suivantes de calibration :

    i) On considère au moins deux masses de gaz enfermées prédéfinies $m_1$, ..., $m_n$ ;
    ii) On détermine un rapport thermique spécifique γ pour chaque masse de gaz enfermée prédéfinie $m_1$, ..., $m_n$ ;
    iii) On détermine au moyen de ladite formule $m = \dfrac{\gamma PV}{\lambda^2 f^2}$ une fréquence d'oscillations de pression f pour chaque
    masse de gaz enfermée prédéfinie $m_1$, ..., $m_n$ en fonction de ladite pression de gaz P mesurée, dudit volume V de la chambre de combustion, de ladite longueur d'onde λ et dudit rapport thermique spécifique γ déterminé ; et
    iv) On compare chaque fréquence d'oscillations de pression f déterminée avec lesdites oscillations de pression mesurées, et on détermine ladite masse de gaz enfermée m en tant que la masse prédéfinie pour laquelle la fréquence d'oscillations de pression f minimise ladite comparaison.

**11.** Procédé de détermination de la masse de gaz aspiré selon la revendication 10, dans lequel on détermine chaque rapport thermique spécifique γ de chaque masse de gaz enfermée prédéfinie $m_1$, ..., $m_n$ en mettant en œuvre les étapes suivantes :

    1. On détermine la composition de ladite masse enfermée ;
    2. On détermine une relation qui relie ledit rapport thermique spécifique γ et la capacité du gaz $c_p$ dans ladite
    chambre de combustion : $\gamma = \dfrac{c_p}{c_p - R}$ avec R la constante du gaz, et la capacité du gaz $c_p$ étant fonction de la
    température dudit gaz et de ladite composition de ladite masse enfermée ;
    3. On détermine la température dudit gaz au moyen de la loi des gaz parfaits appliquée à chaque masse enfermée prédéfinie $m_1$, ..., $m_n$ ; et
    4. On en déduit ledit rapport thermique spécifique γ pour chaque masse enfermée prédéfinie $m_1$, ..., $m_n$.

**12.** Procédé de détermination de la masse de gaz aspiré selon l'une des revendications précédentes, dans lequel on détermine ladite masse de gaz aspiré en temps réel.

**13.** Procédé de contrôle d'un moteur à combustion interne, ledit moteur à combustion interne comprenant au moins un cylindre (1) équipé d'un capteur de pression (3), **caractérisé en ce qu'**on met en œuvre les étapes suivantes :

a. On détermine la masse de gaz aspiré au moyen du procédé de détermination de la masse de gaz aspiré selon l'une des revendications précédentes ; et

b. On contrôle ledit moteur à combustion interne en fonction de ladite masse de gaz aspiré déterminée.

14. Système de contrôle d'un moteur à combustion interne, ledit moteur à combustion interne comprenant au moins un cylindre (1) équipé d'un capteur de pression (3), ledit système de contrôle étant apte à mettre en œuvre un procédé selon l'une des revendications précédentes pour contrôler ledit moteur à combustion interne.

15. Produit programme d'ordinateur téléchargeable depuis un réseau de communication et/ou enregistré sur un support lisible par ordinateur et/ou exécutable par un processeur, comprenant des instructions de code de programme pour la mise en œuvre d'un procédé selon l'une des revendications 1 à 13, lorsque ledit programme est exécuté sur un ordinateur ou un calculateur

**Patentansprüche**

1. Verfahren zur Bestimmung der Menge eines in mindestens einen Zylinder (1) einer Brennkraftmaschine angesaugten Gases, wobei der mindestens eine Zylinder mit einem Drucksensor (3) ausgestattet ist, bei dem folgende Schritte durchgeführt werden:

a. Der Druck des Gases (MES P) in dem mindestens einen Zylinder (1) wird mit Hilfe des Drucksensors (3) gemessen;

b. die Schwingungen des Drucks (OSC P) des Gases werden anhand der Druckmessung in dem mindestens einen Zylinder (1) bestimmt;

c. eine momentane Frequenz der Druckschwingungen f wird durch ein Verfahren zur Kalibrierung der Frequenz der Druckschwingungen oder durch einen Mittelwert der Druckschwingungen über ein vorgegebenes Zeitfenster bestimmt;

d. die Menge des in dem mindestens einen Zylinder (1) eingeschlossenen Gases $m_{tot}$ wird anhand der folgenden Formel bestimmt (DET): wobei $m = \frac{\gamma PV}{\lambda^2 f^2}$ und V das Volumen der Brennkammer (2) des mindestens eines Zylinders (1) ist, $\lambda$ die Wellenlänge in dem mindestens einen Zylinder (1) ist, P der gemessene Druck des Gases in dem mindestens einen Zylinder (1) ist und $\gamma$ das spezifische thermische Verhältnis ist, das mittels einer adiabatischen Näherung bestimmt wird; und

e. die Menge des in den mindestens einen Zylinder (1) angesaugten Gases wird durch die Differenz (DIF) zwischen der bestimmten eingeschlossenen Menge und einer Restgasmenge in dem mindestens einen Zylinder mittels der folgenden Gleichung bestimmt:

$$m_{res}(N, MAP, MAT, V_{IVC}, V_{EVC}) = C_1 \frac{MAP \cdot V_{IVC}}{R \cdot MAT} - C_2 \frac{OF}{N} - C_3 V_{EVC}$$

, wobei N die Drehzahl der Brennkraftmaschine ist, MAP der Druck im Ansaugkrümmer der Brennkraftmaschine ist, MAT die Temperatur im Ansaugkrümmer der Brennkraftmaschine ist, $V_{IVC}$ das Volumen der Brennkammer (2) des mindestens eines Zylinders (1) beim Schließen des Einlassventils des mindestens einen Zylinders (1) ist, $V_{EVC}$ das Volumen der Brennkammer des mindestens einen Zylinders beim Schließen des Auslassventils des mindestens einen Zylinders (1) ist, R die Gaskonstante ist, OF der Überlappungsfaktor des mindestens einen Zylinders ist, $c_1$, $c_2$, $c_3$ Kalibrierungsparameter sind.

2. Verfahren zur Bestimmung der Menge des angesaugten Gases nach Anspruch 1, wobei die adiabatische Näherung über die folgende Gleichung angewendet wird: $\gamma PV = \frac{-V^2 dP}{dV}$ .

3. Verfahren zur Bestimmung der Menge des angesaugten Gases nach einem der vorhergehenden Ansprüche, wobei die Schwingungen des Drucks (OSC P) mittels eines Filters, insbesondere eines Bandpassfilters, bestimmt werden.

4. Verfahren zur Bestimmung der Menge des angesaugten Gases nach einem der vorhergehenden Ansprüche, wobei die Brennkraftmaschine mehrere Zylinder (1) aufweist, wobei jeder Zylinder (1) mit einem Drucksensor (3) ausgestattet ist und wobei die Menge des angesaugten Gases in jeden Zylinder der Brennkraftmaschine durch Ausführen der Schritte für jeden Zylinder (1) bestimmt wird.

5. Verfahren zur Bestimmung der Menge des angesaugten Gases nach einem der vorhergehenden Ansprüche, wobei das Volumen V der Brennkammer (2) des mindestens einen Zylinders (1) mittels eines Kennfelds in Abhängigkeit vom Kurbelwinkel der Brennkraftmaschine erhalten wird.

6. Verfahren zur Bestimmung der Menge des angesaugten Gases nach einem der vorhergehenden Ansprüche, wobei die Wellenlänge λ mittels eines Kennfelds in Abhängigkeit vom Kurbelwinkel der Brennkraftmaschine erhalten wird.

7. Verfahren zur Bestimmung der Menge des angesaugten Gases nach einem der vorhergehenden Ansprüche, wobei das vorgegebene Zeitfenster zwischen 10 und 40° des Drehwinkels der Kurbelwelle der Brennkraftmaschine liegt.

8. Verfahren zur Bestimmung der Menge des angesaugten Gases nach Anspruch 7, wobei die Menge des eingeschlossenen Gases anhand der Formel $m_{tot} = \left( \frac{\sqrt[4]{\frac{\gamma PV}{\lambda^2}}}{\bar{f}} \right)^2$, bestimmt wird, wobei $\bar{f}$ die durchschnittlichen

Frequenz der während des Zeitfensters der vorgegebenen Schwingungen bestimmten Druckschwingungen ist und

$\sqrt{\frac{\gamma PV}{\lambda^2}}$ der Durchschnitt von $\sqrt{\frac{\gamma PV}{\lambda^2}}$ während des vorgegebenen Zeitfensters ist.

9. Verfahren zur Bestimmung der Menge des angesaugten Gases nach einem der Ansprüche 1 bis 5, wobei die momentane Frequenz der Druckschwingungen unter Durchführung einer Kalibrierung durch Vergleich der bestimmten Druckschwingungen mit erzeugten Druckschwingungsfrequenzen bestimmt wird

10. Verfahren zur Bestimmung der Menge des angesaugten Gases nach Anspruch 9, wobei die momentane Frequenz der Druckschwingungen f unter Durchführung der folgenden Kalibrierungsschritte bestimmt wird:

i) Es werden mindestens zwei vordefinierte eingeschlossene Gasmengen $m_1$, ..., $m_n$ betrachtet;
ii) für jede vordefinierte eingeschlossene Gasmenge $m_1$, ..., $m_n$ wird ein spezifisches thermisches Verhältnis γ bestimmt;

iii) mithilfe der Formel $m = \frac{\gamma PV}{\lambda^2 f^2}$ wird eine Druckschwingungsfrequenz f für jede vordefinierte eingeschlossene

Gasmenge $m_1$, ..., $m_n$ in Abhängigkeit von dem gemessenen Gasdruck P, dem Volumen V der Brennkammer, der Wellenlänge λ und dem bestimmten spezifischen thermischen Verhältnis γ bestimmt; und
iv) jede bestimmte Druckschwingungsfrequenz f wird mit den gemessenen Druckschwingungen verglichen, und die eingeschlossene Gasmenge m wird als die vordefinierte Menge bestimmt, bei der die Druckschwingungsfrequenz f den Vergleich minimiert.

11. Verfahren zur Bestimmung der Menge des angesaugten Gases nach Anspruch 10, wobei jedes spezifische thermische Verhältnis γ jeder vordefinierten eingeschlossenen Gasmenge $m_1$, ..., $m_n$ unter Durchführung der folgenden Schritte bestimmt wird:

1. Die Zusammensetzung der eingeschlossenen Menge wird bestimmt;
2. es wird eine Beziehung bestimmt, die das spezifische thermische Verhältnis γ und die Kapazität des Gases $c_p$ in

der Brennkammer miteinander verbindet: $\gamma = \frac{c_p}{c_p - R}$, wobei R die Konstante des Gases ist und die Kapazität

des Gases $c_p$ eine Funktion der Temperatur des Gases und der Zusammensetzung der eingeschlossenen Menge ist;
3. die Temperatur des Gases wird anhand des idealen Gasgesetzes bestimmt, das auf jede vordefinierte eingeschlossene Menge $m_1$, ..., $m_n$ angewendet wird; und
4. daraus wird das spezifische thermische Verhältnis γ für jede vordefinierte eingeschlossene Menge $m_1$, ..., $m_n$ abgeleitet.

12. Verfahren zur Bestimmung der Menge des angesaugten Gases nach einem der vorhergehenden Ansprüche, wobei die Menge des angesaugten Gases in Echtzeit bestimmt wird.

13. Verfahren zur Steuerung einer Brennkraftmaschine, wobei die Brennkraftmaschine mindestens einen Zylinder (1) aufweist, der mit einem Drucksensor (3) ausgestattet ist, **dadurch gekennzeichnet, dass** die folgenden Schritte durchgeführt werden:

    a. Die Menge des angesaugten Gases wird mit dem Verfahren zur Bestimmung der Menge des angesaugten Gases nach einem der vorhergehenden Ansprüche bestimmt; und
    b. die Brennkraftmaschine wird entsprechend der bestimmten angesaugten Gasmenge gesteuert.

14. System zur Steuerung einer Brennkraftmaschine, wobei die Brennkraftmaschine mindestens einen Zylinder (1) aufweist, der mit einem Drucksensor (3) ausgestattet ist, wobei das System zur Steuerung in der Lage ist, ein Verfahren nach einem der vorhergehenden Ansprüche zur Steuerung der Brennkraftmaschine durchzuführen.

15. Computerprogrammprodukt, das aus einem Kommunikationsnetzwerk heruntergeladen werden kann und/oder auf einem computerlesbaren Medium aufgezeichnet ist und/oder durch einen Prozessor ausführbar ist und das Programmcodeanweisungen für die Umsetzung eines Verfahrens nach einem der Ansprüche 1 bis 13 aufweist, wenn das Programm auf einem Computer ausgeführt wird.

**Claims**

1. Method for determining the mass of gas sucked into at least one cylinder (1) of an internal combustion engine, said at least one cylinder being equipped with a pressure sensor (3), wherein the following steps are implemented:

    a. the pressure of said gas (MES P) in said at least one cylinder (1) is measured by means of said pressure sensor (3);
    b. the oscillations of said pressure (OSC P) of said gas are determined on the basis of said pressure measurement in said at least one cylinder (1);
    c. an instantaneous frequency f of said pressure oscillations is determined by a method for calibrating the frequency of pressure oscillations or by an average of said pressure oscillations over a predetermined time window;
    d. the mass $m_{tot}$ of gas enclosed in said at least one cylinder (1) is determined (DET) by means of the formula: with $m = \frac{\gamma PV}{\lambda^2 f^2}$ where V is the volume of the combustion chamber (2) of said at least one cylinder (1), $\lambda$ is the wavelength in said at least one cylinder (1), P is said measured pressure of said gas in said at least one cylinder (1), and $\gamma$ is the specific heat ratio determined by means of an adiabatic approximation; and
    e. said mass of gas sucked into said at least one cylinder (1) is determined by the difference (DIF) between said determined enclosed mass and a mass of residual gas in said at least one cylinder by means of the equation

$$m_{res}(N, MAP, MAT, V_{IVC}, V_{EVC}) = C_1 \frac{MAP \cdot V_{IVC}}{R \cdot MAT} - C_2 \frac{OF}{N} - C_3 V_{EVC}$$

where N is the speed of said combustion engine, MAP is the pressure in the intake manifold of said internal combustion engine, MAT is the temperature in said intake manifold of said internal combustion engine, $V_{IVC}$ is the volume of the combustion chamber (2) of said at least one cylinder (1) upon closure of the intake valve of said at least one cylinder (1), $V_{EVC}$ is the volume of the combustion chamber of said at least one cylinder upon closure of the exhaust valve of said at least one cylinder (1), R is the gas constant, OF is the overlap factor of said at least one cylinder, and $c_1$, $c_2$, $c_3$ are calibration parameters.

2. Method for determining the mass of sucked-in gas according to Claim 1, wherein said adiabatic approximation is applied by the equation: $\gamma PV = \frac{-V^2 dP}{dV}$ .

3. Method for determining the mass of sucked-in gas according to either of the preceding claims, wherein said oscillations of said pressure (OSC P) are determined by means of a filter, notably a bandpass filter.

4. Method for determining the mass of sucked-in gas according to any of the preceding claims, wherein said internal combustion engine has a plurality of cylinders (1), wherein each cylinder (1) is equipped with a pressure sensor (3), and wherein the mass of gas sucked into each cylinder of said internal combustion engine is determined by implementing the steps for each cylinder (1).

5. Method for determining the mass of sucked-in gas according to any of the preceding claims, wherein said volume V of the combustion chamber (2) of said at least one cylinder (1) is obtained by means of a map as a function of the crankshaft angle of said internal combustion engine.

6. Method for determining the mass of sucked-in gas according to any of the preceding claims, wherein said wavelength $\lambda$ is obtained by means of a map as a function of the crankshaft angle of said internal combustion engine.

7. Method for determining the mass of sucked-in gas according to any of the preceding claims, wherein said predetermined time window is between 10 and 40° of the angle of rotation of the crankshaft of said internal combustion engine.

8. Method for determining the mass of sucked-in gas according to Claim 7, wherein said mass of enclosed gas is determined by means of the formula $m_{tot} = \left( \dfrac{\overline{\sqrt{\frac{\gamma PV}{\lambda^2}}}}{\bar{f}} \right)^2$ and $\bar{f}$ the average frequency of said pressure oscillations determined during the predetermined time window of said oscillations, $\overline{\sqrt{\frac{\gamma PV}{\lambda^2}}}$ being the average of $\sqrt{\frac{\gamma PV}{\lambda^2}}$ during said predetermined time window.

9. Method for determining the mass of sucked-in gas according to any of Claims 1 to 5, wherein said instantaneous frequency of said pressure oscillations is determined by implementing a calibration by comparing said determined pressure oscillations with generated pressure oscillation frequencies.

10. Method for determining the mass of sucked-in gas according to Claim 9, wherein said instantaneous frequency f of said pressure oscillations is determined by implementing the following calibration steps:

   i) at least two predefined enclosed masses $m_1$, ..., $m_n$ of gas are considered;
   ii) a specific heat ratio $\gamma$ for each predefined enclosed mass $m_1$, ..., $m_n$ of gas is determined;
   iii) a frequency f of pressure oscillations for each predefined enclosed mass $m_1$, ..., $m_n$ of gas is determined by means of said formula $m = \dfrac{\gamma PV}{\lambda^2 f^2}$ as a function of said measured gas pressure P, of said volume V of the combustion chamber, of said wavelength $\lambda$ and of said determined specific heat ratio $\gamma$; and
   iv) each determined frequency f of pressure oscillations is compared with said measured pressure oscillations, and said enclosed mass m of gas is determined as the predefined mass for which the frequency f of pressure oscillations minimizes said comparison.

11. Method for determining the mass of sucked-in gas according to Claim 10, wherein each specific heat ratio $\gamma$ of each predefined enclosed mass $m_1$, ..., $m_n$ of gas is determined by implementing the following steps:

   1. the composition of said enclosed mass is determined;
   2. a relationship is determined which links said specific heat ratio $\gamma$ and the capacity $c_p$ of the gas in said combustion chamber: $\gamma = \dfrac{c_p}{c_p - R}$ where R is the gas constant, and the capacity $c_p$ of the gas being a function of the temperature of said gas and of said composition of said enclosed mass;
   3. the temperature of said gas is determined by means of the ideal gas law applied to each predefined enclosed mass $m_1$, ..., $m_n$; and
   4. said specific heat ratio $\gamma$ for each predefined enclosed mass $m_1$, ..., $m_n$ is deduced therefrom.

12. Method for determining the mass of sucked-in gas according to any of the preceding claims, wherein said mass of sucked-in gas is determined in real time.

13. Method for controlling an internal combustion engine, said internal combustion engine comprising at least one cylinder (1) equipped with a pressure sensor (3), **characterized in that** the following steps are implemented:

   a. the mass of sucked-in gas is determined by means of the method for determining the mass of sucked-in gas according to any of the preceding claims; and

b. said internal combustion engine is controlled as a function of said determined mass of sucked-in gas.

14. System for controlling an internal combustion engine, said internal combustion engine comprising at least one cylinder (1) equipped with a pressure sensor (3), said control system being able to implement a method according to any of the preceding claims for controlling said internal combustion engine.

15. Computer program product downloadable from a communication network and/or recorded on a medium that is readable by computer and/or executable by a processor, comprising program code instructions for implementing a method according to any of Claims 1 to 13, when said program is executed on a computer or a calculator.

[Fig 1]

[Fig 2]

[Fig 3]

```
          ┌─────────────┐
          │    MES P     │
          └─────────────┘
                 │
                 ▼
          ┌─────────────┐
          │    OSC P     │
          └─────────────┘
                 │
                 ▼
          ┌─────────────┐
          │      f       │
          └─────────────┘
                 │
                 ▼
          ┌─────────────┐
          │     DET      │
          └─────────────┘
                 │
         $m_{tot}$
                 │
                 ▼                    $m_{res}$
          ┌─────────────┐
          │     DIF      │◄───────────
          └─────────────┘
                 │
        $m_{asp}$
                 │
                 ▼
          ┌─────────────┐
          │     CON      │
          └─────────────┘
```

[Fig 4]

[Fig 5]

[Fig 6]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007060349 A
- WO 2015082731 A

- FR 2941266